# EUROPEAN PATENT APPLICATION

(11) **EP 4 657 595 A1**
(43) Date of publication of application: **03.12.2025**
(21) Application number: 25179359.2
(22) Date of filing: 28.05.2025
(51) Int. Cl.: H01M 10/0585, H01M 50/103, H01M 50/516, H01M 50/528, H01M 50/533, H01M 50/55, H01M 50/557, H01M 50/566, H01M 50/586, H01M 50/591, H01M 50/538

(54) **CELL AND BATTERY**

(30) Priority: 31.05.2024 CN 202421243375 U; 31.12.2024 WO PCT/CN2024/144188
(71) Applicant: Eve Power Co., Ltd., Jingmen, Hubei 448000 (CN)
(72) Inventor: GONG, Li, Jingmen, Hubei, 448000 (CN)
(74) Representative: Herrero & Asociados, S.L.

(57) **Abstract**

A cell includes at least one cell core. Each of the at least one cell core includes a positive-electrode sheet, a positive-electrode tab, a negative-electrode sheet, and a negative-electrode tab; the positive-electrode tab is arranged on the positive-electrode sheet; the positive-electrode tab extends away from the positive-electrode sheet; a length of the positive-electrode tab in a direction perpendicular to an extension direction of the positive-electrode tab is L1; the negative-electrode tab is arranged on the negative-electrode sheet; the negative-electrode tab extends away from the negative-electrode sheet, a length of the negative-electrode tab in a direction perpendicular to an extension direction of the negative-electrode tab is L2, where L1/L2=n, and the n is in a range of 1.2≤n≤2.

## Description

### TECHNICAL FIELD

Embodiments of the present disclosure relate to the technical field of batteries, and more specifically, to a cell and a battery.

### BACKGROUND

A battery is a main power source for a new energy vehicle, and a charging speed of the battery directly affects user experience. By performing traditional charging methods, it may take several hours to fully charge the battery, where a slow charging speed is achieved, limiting flexibility of user travel. For the fast charging technology, a charging power is improved, and the battery may be fully charged in a short time, enhancing user experience. In the art, when a tab of the battery is welded to other components, a length of the tab is small, resulting in a slower electron transferring speed and a higher direct current resistance (DCR) of the cell, such that a cycling service life of the cell is reduced. In addition, a weldable area of the tab is small, such that the cell cannot meet requirements of a cell overcurrent capacity during fast charging.

### SUMMARY

The present disclosure provides a cell and a battery in which an electron transferring speed is increased, a high-speed electron channel is constructed. In this way, resistance against electron transferring during charging may be reduced, and the DCR of the cell is significantly reduced.

In a first aspect, a cell is provided and includes at least one cell core. Each of the at least one cell core includes a positive-electrode sheet, a positive-electrode tab, a negative-electrode sheet, and a negative-electrode tab; the positive-electrode tab is arranged on the positive-electrode sheet; the positive-electrode tab extends away from the positive-electrode sheet; a length of the positive-electrode tab in a direction perpendicular to an extension direction of the positive-electrode tab is L1; the negative-electrode tab is arranged on the negative-electrode sheet; the negative-electrode tab extends away from the negative-electrode sheet, a length of the negative-electrode tab in a direction perpendicular to an extension direction of the negative-electrode tab is L2, where L1/L2=n, and the n is in a range of 1.2≤n≤2.

In a second aspect, a battery is provided and includes: the cell in the first aspect, a protective film layer, and a housing. The protective film layer covers an outer surface of the cell, the cell and the protective film layer are arranged inside the housing.

According to the present disclosure, the cell includes at least one core pack, each cell core, and each of the at least one core pack includes a positive-electrode sheet, a positive-electrode tab, a negative-electrode sheet, and a negative-electrode tab. The positive-electrode tab is disposed on the positive-electrode sheet. The positive-electrode tab extends away from the positive-electrode sheet, and the length of the positive-electrode tab in the direction perpendicular to the extension direction of the positive-electrode tab is L1. The negative-electrode sheet is arranged with the negative-electrode tab. The negative-electrode tab extends away from the negative-electrode sheet, and the length of the negative-electrode tab in the direction perpendicular to the extension direction of the negative-electrode tab is L2, where L1/L2=n, and the n is in a range of 1.2≤n≤2. That is, the length of the positive-electrode tab is greater than that of the negative-electrode tab. The enlarged positive-electrode tab increases the electron transferring speed, and the high-speed electron channel is constructed, such that the electron transferring resistance during charging is significantly reduced, and the DCR of the cell is significantly reduced. The DCR of the cell may be less than or equal to 0.42. In addition, increasing the length L1 of the positive-electrode tab may increase the weldable area of the positive-electrode tab, improving the overcurrent capacity of the cell during fast charging, reducing the temperature rise of the cell during high-rate charging, and meeting the requirements of fast charging. The present disclosure further provides a battery, including the above-mentioned cell, having the above-mentioned technical effects

### BRIEF DESCRIPTION OF THE DRAWINGS

FIG. 1 is a schematic structural view of a cell according to some embodiments of the present disclosure.
FIG. 2 is an exploded view of the cell according to some embodiments of the present disclosure.
FIG. 3 is a schematic structural view of connection between a cell core and an electrode pole in the cell according to some embodiments of the present disclosure.
FIG. 4 is a schematic structural view of sizes of the connection between the cell core and the electrode pole in FIG. 3
FIG. 5 is a schematic structural view of sizes of a positive electrode pole and a positive-electrode connecting sheet in FIG. 3
FIG. 6 is a schematic structural view of sizes of a negative-electrode pole and a negative-electrode connecting sheet in FIG. 3
FIG. 7 is a schematic structural view of a battery according to some embodiments of the present disclosure.
FIG. 8 is an exploded schematic view of the battery according to some embodiments of the present disclosure.

Reference numerals in the drawings:

cell: 10; cell core: 11; positive-electrode tab: 111; negative-electrode tab: 112; positive-electrode sheet: 113; negative-electrode sheet: 114; positive-electrode connecting sheet: 12; negative-electrode connecting sheet: 13; positive-electrode pole: 14; negative-electrode pole: 15; first connecting portion: 121; second connecting portion: 122; first intermediate portion: 123; third connecting portion: 131; fourth connecting portion: 132; second intermediate portion: 133; first weld mark: 20; second weld mark: 21; battery: 300; housing: 31; bottom shell: 311; top cover assembly: 312; liquid injection hole: 3121; sealing bead: 34; top insulation sheet: 35; explosion-proof valve: 36; blue film: 37; first auxiliary welding sheet: 38; second auxiliary welding sheet: 39.

### DETAILED DESCRIPTIONS

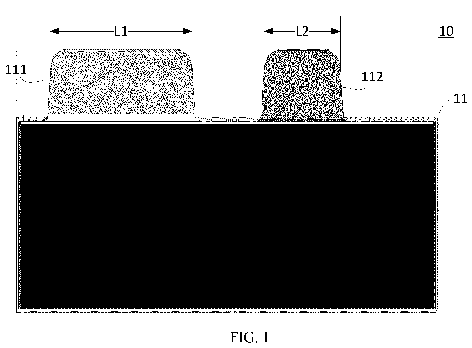

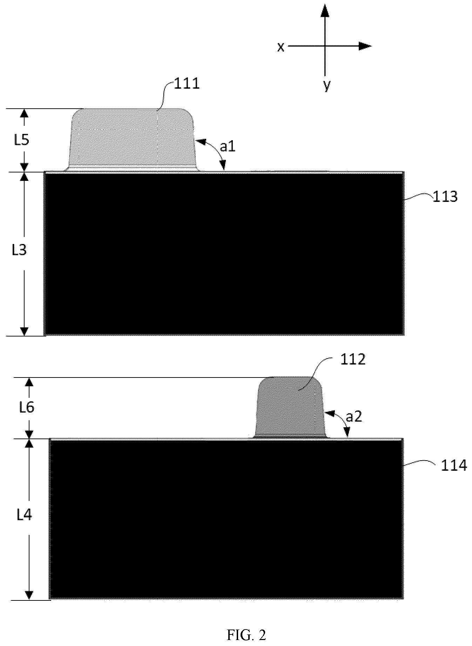

As shown in FIGS. 1 and 2, a cell 10 of the present disclosure includes at least one cell core 11. Each of the at least one cell core 11 includes a positive-electrode sheet 113, a negative-electrode sheet 114, a separator (not shown), a positive-electrode tab 111, and a negative-electrode tab 112. The positive-electrode sheet 113 and the negative-electrode sheet 114 are laminated. The separator is disposed between the positive-electrode sheet 113 and the negative-electrode sheet 114 adjacent to the positive-electrode sheet 113 to separate the positive-electrode sheet 113 from the negative-electrode sheet 114. The positive-electrode tab 111 is disposed on the positive-electrode sheet 113. The negative-electrode tab 112 is connected to and arranged on the negative-electrode sheet 114. As shown in FIG. 2, the positive-electrode tab 111 is disposed on a side of the positive-electrode sheet 113 along a y-direction, and the negative-electrode tab 112 is disposed on a side of the negative-electrode sheet 114 along the y-direction. The positive-electrode tab 111 extends away from the positive-electrode sheet 113, and the negative-electrode tab 112 extends away from the negative-electrode sheet 114. In some embodiments, as shown in FIG. 2, both the positive-electrode tab 111 and the negative-electrode tab 112 extend along the y-direction.

In some embodiments, the positive-electrode tab 111 is disposed on the side of the positive-electrode sheet 113 along the y-direction. The positive-electrode sheet 113 is connected to the positive-electrode tab 111 via a connecting portion. The negative-electrode tab 112 is disposed on the side of the negative-electrode sheet 114 along the y-direction. The negative-electrode sheet 114 is connected to the negative-electrode tab 112 via a connecting portion.

A length of the positive-electrode tab 111 in a direction perpendicular to an extension direction of the positive-electrode tab 111 is L1, and a length of the negative-electrode tab 112 in a direction perpendicular to an extension direction of the negative-electrode tab 112 is L2. That is, the length of the positive-electrode tab 111 in an x-direction is L1, and the length of the negative-electrode tab 112 in the x-direction is L2, where the L1 is greater than the L2. Specifically, L1/L2=n, where the n is in a range from 1.2 to 2, for example, the n may be 1.2, 1.3, 1.4, 1.5, 1.6, 1.7, 1.8, 1.9, or 2.

It should be noted that a direct current resistance (DCR) of the cell 10 includes ohmic polarization resistance (RI), a charge transfer resistance (Rct), and concentration polarization resistance (Rc). The charge transfer resistance is substantially generated during initial establishment of an interface potential. The concentration polarization resistance is caused by a concentration difference between an inside of an electrode and an outside of the electrode. The ohmic polarization resistance is composed of electron transferring resistance and solution resistance. Reducing the ohmic polarization resistance is an effective means to reduce the DCR of the cell 10. In the present disclosure, since a ratio of the length L1 of the positive-electrode tab 111 to the length L2 of the negative-electrode tab 112 is n, where the n is in the range from 1.2 to 2, the length of the positive-electrode tab 111 is greater than that of the negative-electrode tab 112, and the positive-electrode tab 111 is increased in size, such that an electron transferring speed is increased, and a high-speed electron channel is constructed. In this way, electron transferring resistance during charging is effectively reduced, and the DCR of the cell 10 is effectively reduced, allowing the DCR of the cell 10 to be less than or equal to 0.42. In addition, increasing the length L1 of the positive-electrode tab 111 may increase a weldable area of the positive-electrode tab 111. In this way, an overcurrent capacity of the cell 10 during fast charging is improved, a temperature increase of the cell 10 during high-rate charging is reduced, and requirements of fast charging are met.

**TABLE 1**

| | | | | | | |
|---|---|---|---|---|---|---|
| n | 1.3 | 1.4 | 1.5 | 1.6 | 1.7 | 1.8 |
| DCR (mΩ) | 0.420 | 0.401 | 0.373 | 0.383 | 0.389 | 0.392 |

Table 1 shows the DCR values of the cell 10 when the n is in the range from 1.2 to 2. According to Table 1, when the n is in the range from 1.2 to 2, the DCR values of the cell 10 are relatively small. Especially when the n is in a range from 1.5 to 1.8, the DCR values of the cell 10 are less than 0.4mΩ, and the cell 10 exhibits excellent electron transferring performance, and the DCR value is significantly low. As the n is approaching 1.5, the DCR value of the cell 10 decreases significantly, and a fast charging capability of the cell 10 is significantly improved.

Further, in an embodiment, the length L1 is in a range of 70-80 mm, such as 70mm, 72mm, 73mm, 75mm, 78mm, 80mm, and so on; and the length L2 is in a range of 40mm-50mm, such as 40mm, 42mm, 43mm, 45mm, 48mm, 50mm, and so on. The length L1 of the positive-electrode tab 111 and the length L2 of the negative-electrode tab 112 are limited by a total length of the cell core 11.

Further, the length L2 of the negative-electrode tab 112 is 50mm. Increasing the length L2 of the negative-electrode tab 112 may increase a surface area of the negative-electrode tab 112, such that the DCR value of the cell 10 may be reduced. That is, while L1/L2=1.5, the length L2 of the negative-electrode tab 112 is set to be 50mm, such that the DCR value of the cell 10 is reduced.

As shown in FIG. 2, in the present embodiment, an outer angle a1 between the positive-electrode tab 111 and the positive-electrode sheet 113 is an obtuse angle, and an outer angle a2 between the negative-electrode tab 112 and the negative-electrode sheet 114 is an obtuse angle. The obtuse angle prevents the positive-electrode tab 111 and the negative-electrode tab 112 from being folded during manufacturing.

Further, the outer angle a1 between the positive-electrode tab 111 and the positive-electrode sheet 113 is in a range of 92°-100°, such as 92°, 93°, 94°, 95°, 96°, 97°, 98°, 100°, and so on. The outer angle a2 between the negative-electrode tab 112 and the negative-electrode sheet 114 is in a range of 92°-100°, such as 92°, 93°, 94°, 95°, 96°, 97°, 98°, 100°, and so on. In an embodiment, the angle a1 and the angle a2 may be in a same value, such as 97°. In some embodiments, the angle a1 and the angle a2 may be in different values, for example, the angle a1 may be 97°, and the angle a2 may be 93°.

In an embodiment, a side of the positive-electrode tab 111 away from the positive-electrode sheet 113 is configured to have a rounded corner for transition. Similarly, a side of the negative-electrode tab 112 away from the negative-electrode sheet 114 is configured to have a rounded corner for transition. By configuring the rounded corners for transition, a top of the tab is smoothly transitioned, further reducing possibility of the tabs being folded during the manufacturing. In some embodiments, a radius of the rounded corner is in a range of 8mm-12mm, such as 8mm, 9mm, 10mm, 12mm, and so on.

As shown in FIG. 2, in an embodiment, a width of the positive-electrode sheet 113 is L3, and a width of the negative-electrode sheet 114 is L4. In the present embodiment, the width L3 of the positive-electrode sheet 113 is in a range of 30mm-40mm. In some embodiments, the L3 may be 30mm, 31mm, 32mm, 35mm, 37mm, 38mm, 40mm, and so on. The width L4 of the negative-electrode sheet 114 is in a range of 30mm-40mm. In some embodiments, the L4 may be 30mm, 31mm, 32mm, 35mm, 37mm, 38mm, 40mm, and so on. By arranging the width of the positive-electrode sheet 113 and the width of negative-electrode sheet 114 being within the range of 30mm-40mm, on the one hand, the width of the positive-electrode sheet 113 and the width of the negative-electrode sheet 114 are appropriate to ensure the cell core 11 to provide sufficient power; and on the other hand, the width of the positive-electrode sheet 113 and the width of the negative-electrode sheet 114 are not excessively large to prevent the cell core 11 from occupying an excessively large space.

It should be noted that the width L3 of the positive-electrode sheet 113 refers to a size of the positive-electrode sheet 113 in a direction perpendicular to the extension direction of the positive-electrode tab 111, and the width L4 of the negative-electrode sheet 114 refers to a size of the negative-electrode sheet 114 in a direction perpendicular to the extension direction of the negative-electrode tab 112. That is, the width of the positive-electrode sheet 113 in the x-direction is L3, and the width of the negative-electrode sheet 114 in the x-direction is L4.

In an embodiment, L3 < L4. In some embodiments, the L3 is 1mm-3mm smaller than the L4, for example, the L3 may be 1mm, 2mm, or 3mm smaller than the L4. Since lithium may be easily precipitated from the positive-electrode sheet 113, smooth flowing of lithium ions in the cell 10 may be affected, causing an increase in resistance. In the present embodiment, the width L3 of the positive-electrode sheet 113 is smaller than the width L4 of the negative-electrode sheet 114, such that possibility of lithium precipitation at the positive-electrode sheet 113 is reduced, such that an internal resistance of the cell 10 is reduced, an internal loss of the cell 10 is reduced, avoiding a decline in a capacity of the cell 10, and improving an efficiency of the cell 10.

Correspondingly, a width L5 of the positive-electrode tab 111 is 1mm-3mm larger than a width L6 of the negative-electrode tab 112, for example, the L5 is 1mm, 2mm, or 3mm larger than the L6, to compensate for a width difference between the positive-electrode sheet 113 and the negative-electrode sheet 114. In this way, the positive-electrode tab 111 and the negative-electrode tab 112 can be connected to electrode poles, respectively. The width L5 of the positive-electrode tab 111 refers to a size of the positive-electrode tab 111 in the direction perpendicular to the extension direction of the positive-electrode tab 111, and the width L6 of the negative-electrode tab 112 refers to a size of the negative-electrode tab 112 in a direction perpendicular to the extension direction of the negative-electrode tab 112. That is, the width of the positive-electrode tab 111 in the x-direction is the L5; and the width of the negative-electrode tab 112 in the x-direction is the L6. The width L5 of the positive-electrode tab 111 is in a range of 18mm-22mm, and the width L6 of the negative-electrode tab 112 is in a range of 18mm-22mm. In some embodiments, the L3 may be 30mm, the L4 may be 31mm, the L5 may be 38mm, and the L6 may be 37mm; alternatively, the L3 may be 37mm, the L4 may be 40mm, the L5 may be 22mm, and the L6 may be 19mm.

It should be noted that during manufacturing the cell 10, the positive-electrode tab 111 is disposed on the positive-electrode sheet 113, and the negative-electrode tab 112 is disposed on the positive-electrode sheet 113. Subsequently, a weld mark is configured on the positive-electrode tab 111, and a weld mark is configured on the negative-electrode tab 112. The positive-electrode tab 111 and the negative-electrode tab 112 are then cut, enabling the width L5 of the positive-electrode tab 111 to be in the range of 18mm-22mm and enabling the width L6 of the negative-electrode tab 112 to be in the range of 18mm-22mm. The positive-electrode tab 111 is then connected to a positive-electrode connecting sheet and a positive-electrode pole, and the negative-electrode tab 112 is then connected to a negative-electrode connecting sheet and a negative-electrode pole. During connecting the positive-electrode tab 111 to the positive-electrode connecting sheet and the positive-electrode pole and connecting the negative-electrode tab 112 to the negative-electrode connecting sheet and the negative-electrode pole, a gap of 1mm-2mm is reserved between the positive-electrode tab 111 and the positive-electrode pole to facilitate laser welding between the positive-electrode connecting sheet and the positive-electrode tab 111, and a gap of 1mm-2mm is reserved between the negative-electrode tab 112 and the negative-electrode pole to facilitate laser welding between the negative-electrode connecting sheet and the negative-electrode tab 112.

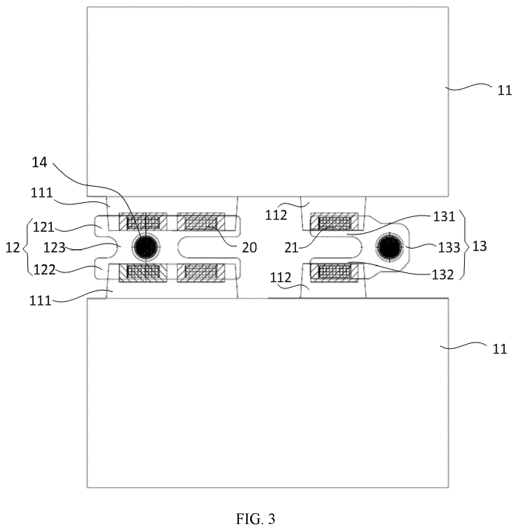

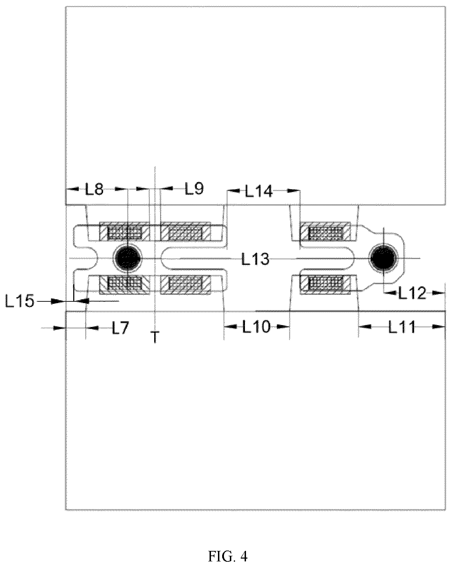

As shown in FIGS. 3 and 4, the cell 10 further includes a positive-electrode connecting sheet 12, a negative-electrode connecting sheet 13, a positive-electrode pole 14, and a negative-electrode pole. The positive-electrode connecting sheet 12 is welded to the positive-electrode tab 111, such that the positive-electrode tab 111 is connected to the positive-electrode pole 14 through the positive-electrode connecting sheet 12. The negative-electrode connecting sheet 13 is welded to the negative-electrode tab 112, such that the negative-electrode tab 112 is connected to the negative-electrode pole through the negative-electrode connecting sheet 13.

As shown in FIG. 3, the positive-electrode pole 14 and the negative-electrode pole are both disposed on a cell body formed by two cell cores 11 connected to each other, and are spaced apart from each other. A diameter of the positive-electrode pole 14 is d1, and a diameter of the negative-electrode pole is d2. In some embodiments, the diameter d1 of the positive-electrode pole 14 and the diameter d2 of the negative-electrode pole are both in a range of 10mm-14mm, such as 10mm, 12mm, 14mm, and so on. In the present embodiment, the diameter d1 of the positive-electrode pole 14 and the diameter d2 of the negative-electrode pole are both 12mm. The diameter of the positive-electrode pole 14 and the diameter of the negative-electrode pole are determined to facilitate electrically connecting the battery to an external electrical device. Moreover, configuring the diameter of the positive-electrode pole 14 and the diameter of the negative-electrode pole to be in the range of 10mm-14mm enables the cell to occupy less space.

As shown in FIG. 3, for each cell core, a first weld mark 20 is arranged on the positive-electrode tab 111, and a second weld mark 21 is arranged on the negative-electrode tab 112. In some embodiments, a plurality of first weld marks 20 may be arranged on the positive-electrode tab 111, and one second weld mark 21 may be arranged on the negative-electrode tab 112. In some embodiments, the plurality of first weld marks 20 are arranged along a direction perpendicular to the extension direction x of the positive-electrode tab 111. The plurality of first weld marks 20 have a same size. The size of each of the plurality of first weld marks 20 on the positive-electrode tab 111 is the same as a size of the second weld mark 21 on the negative-electrode tab 112. The size of each weld mark includes a length and a width of the weld mark. Further, each of the width of each first weld mark 20 on the positive-electrode tab 111 and the width of the second weld mark 21 on the negative-electrode tab 112 is in a range from 6mm-10mm, and each of the length of each first weld mark 20 on the positive-electrode tab 111 and the length of the second weld mark 21 on the negative-electrode tab 112 is in a range from 15mm-20mm, so as to facilitate welding the positive-electrode tab 111 and the negative-electrode tab 112 to the positive-electrode connecting sheet 12 and the negative-electrode connecting sheet 13, respectively. The width may be 6.5mm, 8mm, or other values, and the length may be 16mm, 18mm, or other values.

In an embodiment, each cell core 11 has two first weld marks 20 on the positive-electrode tab 111 and one second weld mark 21 on the negative-electrode tab 112. A total area of the first weld marks 20 on the positive-electrode tab 111 is larger than a total area of the second weld mark 21 on the negative-electrode tab 112. In this way, a welding area between the positive-electrode connecting sheet 12 and the positive-electrode tab 111 is larger than a welding area between the negative-electrode connecting sheet 13 and the negative-electrode tab 112. It can be understood that when a plurality of core packs 11 are arranged, the welding area between the positive-electrode connecting sheet 12 and the positive-electrode tab 111 refers to a welding area between the positive-electrode connecting sheet 12 and the positive-electrode tab 111 of each cell core 11. In the present embodiment, the welding area between the positive-electrode connecting sheet 12 and the positive-electrode tab 111 is larger, so as to improve the overcurrent capacity of the cell 10 to reduce the DCR of the cell 10 and to reduce the temperature increase during high-rate charging.

In an embodiment, in the direction perpendicular to the extension direction of the positive-electrode tab 111, a distance L7 between the side of the positive-electrode tab 111 away from the negative-electrode tab 112 and an edge of the positive-electrode sheet 113 is in a range of 10mm-20mm. As shown in FIG. 4, in the x-direction, the distance L7 between the side of the positive-electrode tab 111 away from the negative-electrode tab 112 and the edge of the positive-electrode sheet 113 is in the range of 10mm-20mm. Due to the positive-electrode tab 111 being widened, the distance L7 between the side of the positive-electrode tab 111 away from the negative-electrode tab 112 and the edge of the positive-electrode sheet 113 is shortened. In some embodiments, the L7 may be 10mm, 11mm, 12mm, 13mm, 15mm, 16mm, 18mm, 20mm, and so on. In the x-direction, a distance L8 between a center of the positive-electrode pole 14 and an edge of the positive-electrode sheet 113 is in a range of 38mm-58mm. In some embodiments, the L8 may be 38mm, 40mm, 42mm, 45mm, 48mm, 50mm, 52mm, 56mm, 58mm, and so on.

In some embodiments, L8-L7-d1/2≥ 5mm. As shown in FIG. 4, the outer angle a1 between the positive-electrode tab 111 and the positive-electrode sheet 113 is slightly greater than 90°, such that two long sides of the positive-electrode tab 111 in the direction perpendicular to the extension direction of the positive-electrode tab 111 are different from each other. A difference between a longer one of the two long sides and a shorter one of the two long sides is in a range of 0-7mm. Due to L8-L7-d1/2 ≥ 5mm, most of positive-electrode poles 14 overlap with the positive-electrode tab 111 in the y-direction, and the positive-electrode pole 14 overlaps with the shorter one of the two long sides of the positive-electrode tab 111 in the y-direction. Since the positive-electrode pole 14 and the shorter one of the two long sides of the positive-electrode tab 111 are connected via the positive-electrode connecting sheet 12, L8-L7-d1/2≥ 5mm allows the positive-electrode tab 111 to be disposed closer to the positive-electrode pole 14, further improving an overcurrent efficiency between the positive-electrode tab 111 and the positive-electrode pole 14 and reducing the DCR of the cell 10. Further, due to L8-L7-d1/2≥7mm, the positive-electrode pole 14 completely overlaps with the shorter one of the two long sides of the positive-electrode tab 111 in the y-direction, further shortening a distance between the positive-electrode tab 111 and the positive-electrode pole 14.

When arranging the weld marks, due to process limitations, a minimum distance between the weld mark and an edge of the tab is about 5mm, and a certain distance is formed between two adjacent weld marks on one tab. Since the first weld mark 20 is arranged on a side of the positive-electrode tab 111 near the shorter one of the two long sides and L8-L7-d1/2≥ 12mm, the positive-electrode pole 14 overlaps with the first weld mark 20 on the positive-electrode tab 111 in the y-direction, further improving the overcurrent efficiency between the positive-electrode tab 111 and the positive-electrode pole 14.

In some embodiments, the outer angle a1 between the positive-electrode tab 111 and the positive-electrode sheet 113 is 90°. L8-L7-d1/2≥5mm allows the positive-electrode pole 14 to overlap with the first weld mark 20 on the positive-electrode tab 111 in the y-direction, such that the overcurrent efficiency between the positive-electrode tab 111 and the positive-electrode pole 14 is improved.

In some embodiments, L8-L7+d1/2≤L1/2. As shown in FIG. 4, a central axis of the positive-electrode tab 111 is T, and L8-L7+d1/2≤L1/2 allows the positive-electrode pole 14 to be located on a left side of the central axis T, i.e., located on a side away from the negative-electrode pole. In this way, the connection between the positive-electrode pole 14 and the positive-electrode tab 111 is ensured, and the positive-electrode pole 14 and the negative-electrode pole are prevented from being disposed excessively close to each other.

On the positive-electrode tab 111, a spacing L9 between two of the plurality of first weld marks 20 is in a range of 5mm-10mm, such as 5mm, 6mm, 8mm, 10mm, and so on. As shown in FIGS. 3 and 4, as the spacing L9 between the two first weld marks 20 on the positive-electrode tab 111 is smaller, the DCR of the cell 10 is smaller. As the spacing L9 between the two first weld marks 20 on the positive-electrode tab 111 is smaller, the two first weld marks 20 are disposed closer to the positive-electrode pole 14. In this way, lithium ions and electrons may be more easily transferred between the tab, the connecting sheet, and the electrode pole, further reducing the DCR of the cell 10.

In the case of L8-L7+d1/2 ≤L1/2, one of the plurality of first weld marks 20 away from the negative-electrode tab 112 (i.e., a first weld mark 20 on a left side in FIG. 4) is disposed corresponding to the positive-electrode pole 14. As the L9 is smaller, one of the plurality of first weld marks 20 near the negative-electrode tab 112 (i.e., a first weld mark 20 on a right side in FIG. 4) is disposed closer to the positive-electrode pole 14.

In the present embodiment, in the x-direction, a distance L7 between the side of the positive-electrode tab 111 away from the negative-electrode tab 112 and the edge of the positive-electrode sheet 113 is 10mm, and the distance L8 between the center of the positive-electrode pole 14 and the edge of the positive-electrode sheet 113 is 40mm. L8-L7-d1/2 is 18mm. The spacing L9 between two first weld marks 20 is 5mm.

A distance L10 between the positive-electrode tab 111 and the negative-electrode tab 112 is in a range of 22mm-35mm, to prevent the positive-electrode tab 111 and the negative-electrode tab 112 from being disposed excessively closed to each other. In some embodiments, the L10 may be 22mm, 25mm, 26mm, 28mm, 30mm, 31mm, 32mm, 33mm, 35mm, and so on. In the x-direction, a distance L11 between the side of the negative-electrode tab 112 away from the positive-electrode tab 111 and the edge of the negative-electrode sheet 114 is in a range of 30mm-40mm. In some embodiments, the L11 may be 30mm, 32mm, 35mm, 38mm, 39mm, 40mm, and so on. A distance L12 between the center of the negative-electrode pole and the edge of the negative-electrode sheet 114 is in a range of 25mm-35mm. In some embodiments, the L12 may be 25mm, 28mm, 29mm, 30mm, 32mm, 33mm, 35mm, and so on.

In the present embodiment, the distance L10 between the positive-electrode tab 111 and the negative-electrode tab 112 is 26mm. The distance L11 between the side of the negative-electrode tab 112 away from the positive-electrode tab 111 and the edge of the negative-electrode sheet 114 is 38mm. The distance L12 between the center of the negative-electrode pole and the edge of the negative-electrode sheet 114 is 35mm.

As shown in FIG. 4, a distance L13 between the center of the positive-electrode pole 14 and the center of the negative-electrode pole is in a range of 125-130mm. In some embodiments, the L13 may be 125mm, 126mm, 128mm, 129mm, 130mm, and so on. It can be understood that the positive-electrode pole 14 and the negative-electrode pole are spaced apart from each other to facilitate the connecting sheet to be arranged therebetween and to avoid short circuits caused by the positive-electrode pole 14 and the negative-electrode pole being disposed excessively closed to each other. In the present embodiment, the L13 is 129mm.

A distance L14 between the positive-electrode connecting sheet 12 and the negative-electrode connecting sheet 13 is in a range of 35mm-40mm. In some embodiments, the L14 is 35mm, 37mm, 39mm, 40mm, and so on. In the present embodiment, the L14 is 37mm. It can be understood that a certain spacing is formed between the positive-electrode connecting sheet 12 and the negative-electrode connecting sheet 13 to avoid short circuits. In the present embodiment, a projection of the positive-electrode connecting sheet 12 onto the positive-electrode tab 111 protrudes out of the edge of the positive-electrode tab 111. In a projection pattern on a plane where the negative-electrode tab 112 is arranged, an edge of a side of the negative-electrode tab 112 near the positive-electrode tab 111 protrudes out of an edge of a side of the negative-electrode connecting sheet 13 near the positive-electrode connecting sheet 12. While ensuring that the positive-electrode connecting sheet 12 covers the first weld marks 20 on the positive-electrode tab 111 and the negative-electrode connecting sheet 13 covers the second weld mark 21 on the negative-electrode tab 112, the distance L14 between the positive-electrode connecting sheet 12 and the negative-electrode connecting sheet 13 is maintained in a range of 35mm-40mm.

As shown in FIG. 4, in the x-direction, a distance between the side of the positive-electrode connecting sheet 12 away from the negative-electrode connecting sheet 13 and the edge of the positive-electrode sheet 113 is L15, where L7≥L15. It can be understood that in the x-direction, the length of the positive-electrode connecting sheet 12 is greater than the length of the positive-electrode tab 111 to facilitate the positive-electrode connecting sheet 12 to overlap the first weld marks 20 on the positive-electrode tab 111 in the x-direction. Further, in the x-direction, the distance between the positive-electrode connecting sheet 12 and the edge of the positive-electrode sheet 113 is smaller than the distance between the positive-electrode tab 111 and the edge of the positive-electrode sheet 113. Since the positive-electrode connecting sheet 12 and the positive-electrode tab 111 are completely overlapped in the x-direction, overlapping between the positive-electrode connecting sheet 12 and the first weld marks 20 is ensured, reducing possibility of an electrical connection area being reduced due to the first weld marks 20 being exposed.

In the present embodiment, the number of the at least one cell core 11 is two. In other embodiments, the number of at least one cell core 11 may be four or other values.

As shown in FIG. 3, the positive-electrode connecting sheet 12 includes a first connecting portion 121, a second connecting portion 122, and a first intermediate portion 123 connected between the first connecting portion 121 and the second connecting portion 122. The negative-electrode connecting sheet 13 includes a third connecting portion 131, a fourth connecting portion 132, and a second intermediate portion 133 connected between the third connecting portion 131 and the fourth connecting portion 132. The first connecting portion 121 and the second connecting portion 122 of the positive-electrode connecting sheet 12 are welded to two positive-electrode tabs 111 of the two cell cores 11, respectively. The third connecting portion 131 and the fourth connecting portion 132 of the negative-electrode connecting sheet 13 are welded to two negative-electrode tabs 112 of the two cell cores 11, respectively.

In other embodiments, each of the positive-electrode connecting sheet 12 and the negative-electrode connecting sheet 13 may be a straight strip or configured in other shapes, which may be determined according to actual needs.

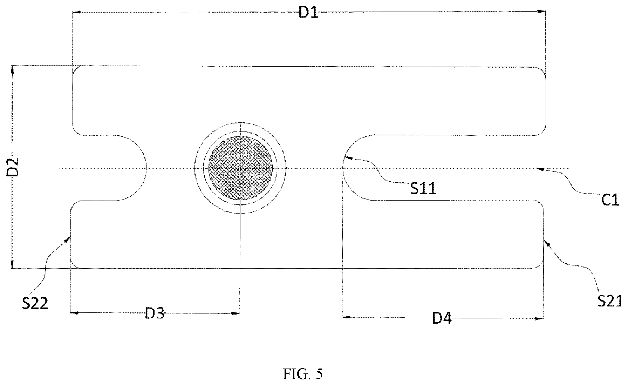

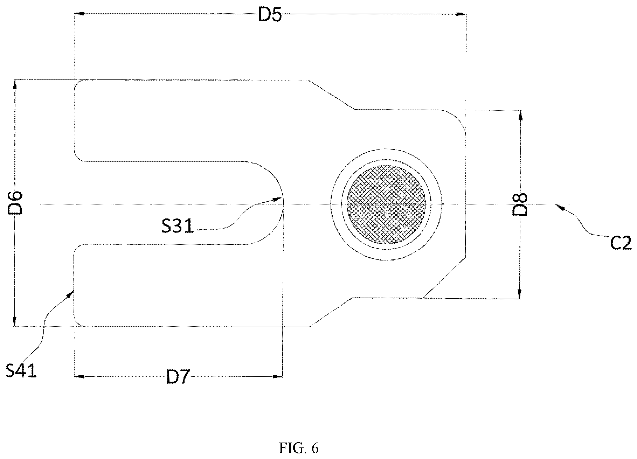

As shown in FIGS. 5 and 6, a length of the positive-electrode connecting sheet 12 is D1, and a length of the negative-electrode connecting sheet 13 is D5, where D1/D5=k, and the k is in a range of 1.3≤k≤1.5. In some embodiments, the k may be 1.3, 1.35, 1.36, 1.4, 1.5, and so on. In the present embodiment, the length L1 of the positive-electrode tab 111 is greater than the length L2 of the negative-electrode tab 112, and accordingly, the length of the positive-electrode connecting sheet 12 is greater than the length of the negative-electrode connecting sheet 13. D1/D5=k, and the k is in a range of 1.3≤k≤1.5, such that the positive-electrode connecting sheet 12 covers the plurality of first weld marks 20 on the positive-electrode tab 111, and the negative-electrode connecting sheet 13 covers the second weld mark 21 on the negative-electrode tab 112; and connection between the negative-electrode connecting sheet 13 and the negative-electrode pole is ensured.

Specifically, as shown in FIG. 5, the length D1 of the positive-electrode connecting sheet 12 is in a range of 75mm-78mm, such as 75mm, 76mm, 76.7mm, 77mm, 78mm, and so on. A sum of the length of the first connecting portion 121 and the length of the second connecting portion 122 is the length D1 of the positive-electrode connecting sheet 12. A width D2 of the positive-electrode connecting sheet 12 is in a range of 33mm-36mm, such as 33mm, 35mm, 36mm, and so on. Each of a width of the first connecting portion 121 and a width of the second connecting portion 122 is in a range of 11mm-12mm.

It can be understood that when the length of the first connecting portion 121 and the length of the second connecting portion 122 are excessively short or the width of the first connecting portion 121 and the width of the second connecting portion 122 are excessively short, the plurality of first weld marks 20 on the positive-electrode tab 111 may insufficiently covered. When the length of the first connecting portion 121 and the length of the second connecting portion 122 are excessively long, the positive-electrode connecting sheet 12 may exceed the edge of the positive-electrode sheet 113, or the distance between the positive-electrode connecting sheet 12 and the negative-electrode connecting sheet 13 may be shortened, causing short circuits.

The first connecting portion 121 and the second connecting portion 122 are respectively disposed on two sides of the first intermediate portion 123 along the x-direction. The first intermediate portion 123 is connected between the first connecting portion 121 and the second connecting portion 122. Specifically, the first intermediate portion 123 is connected to a middle section of the first connecting portion 121, and the first intermediate portion 123 is connected to a middle section of the second connecting portion 122. The first intermediate portion 123, the first connecting portion 121, and the second connecting portion 122 cooperatively form an "H" shape. It can be understood that the first intermediate portion 123, the first connecting portion 121, and the second connecting portion 122 cooperatively form the "H" shape, such that the first connecting portion 121 may be better connected to the first weld marks 20 on the positive-electrode tab 111 of one cell core 11, and the second connecting portion 122 may be better connected to the positive-electrode tab 111 of another cell core 11. Furthermore, the first intermediate portion 123 covers the positive-electrode pole 14. The first intermediate portion 123 guides the lithium ions and the electrons from the middle section of the first connecting portion 121 and the middle section of the second connecting portion 122 to the positive-electrode pole 14, and is electrically connected to the positive-electrode pole 14.

In a direction where the first connecting portion 121, the first intermediate portion 123, and the second connecting portion 122 are connected to each other in sequence, a length of the first intermediate portion 123 firstly decreases and then increases, such that a side of the first intermediate portion 123 forms a curve. It can be understood that the first connecting portion 121, the first intermediate portion 123, and the second connecting portion 122 are smoothly connected to each other. In this way, a resistance change of the positive-electrode connecting sheet 12, which is caused by a sudden change in lengths of the first connecting portion 121, the first intermediate portion 123, and the second connecting portion 122, may be alleviated, and connection resistance of the positive-electrode connecting sheet 12 may be reduced.

As shown in FIG. 5, the positive-electrode connecting sheet 12 is symmetrical about a central axis C1, and the central axis C1 is a central axis of the positive-electrode connecting sheet 12 in a width direction. The central axis C1 extends along the length direction of the positive-electrode connecting sheet 12. The first connecting portion 121 and the second connecting portion 122 are respectively located on two sides of the central axis C1. The center of the positive-electrode pole 14 is located on the central axis C1 of the positive-electrode connecting sheet 12. A distance D3 between a center of the positive-electrode pole 14 and a second side edge of the second connecting portion 122 is in a range of 27mm-30mm, such as 27mm, 28mm, 30mm, and so on. It should be noted that the distance D3 between the center of the positive-electrode pole 14 and the second side edge S22 of the second connecting portion 122 is equal to a distance between the center of the positive-electrode pole 14 and a second side edge of the first connecting portion 121. It can be understood that the positive-electrode connecting sheet 12 is connected to the positive-electrode pole 14 substantially via the first intermediate portion 123, overlapping between the center of the positive-electrode pole 14 and the central axis C1 of the positive-electrode connecting sheet 12 enables the first intermediate portion 123 covers the positive-electrode pole 14 to achieve connection. Along an extension direction of the second connecting portion 122, i.e., the x-direction, a distance D4 between a side edge of the first intermediate portion 123 near the negative-electrode connecting sheet 13 and a side edge of the second connecting portion 122 near the negative-electrode connecting sheet 13 is in a range of 30-33mm, such as 30mm, 31mm, 32mm, 33mm, and so on. It should be noted that the distance between the side edge of the first intermediate portion 123 near the negative-electrode connecting sheet 13 and the side edge of the second connecting portion 122 near the negative-electrode connecting sheet 13 is equal to the distance between the side edge of the first intermediate portion 123 near the negative-electrode connecting sheet 13 and the side edge of the first connecting portion 121 near the negative-electrode connecting sheet 13. It can be understood that the lithium ions and the electrons are transferred from the positive-electrode tab 111, through the first connecting portion 121 or the second connecting portion 122, and are guided by the first intermediate portion 123 to reach the positive-electrode pole 14. Since the length of the first intermediate portion 123 is small, the distance D4 between the side edge of the first intermediate portion 123 near the negative-electrode connecting sheet 13 and the side edge of the second connecting portion 122 near the negative-electrode connecting sheet 13 is configured to allow the lithium ions and the electrons to be guided and concentrated from the second connecting portion 122 or the first connecting portion 121 to the first intermediate portion 123, i.e., concentrated around the positive-electrode pole 14. Subsequently, the concentrated lithium ions and electrons are transferred to the positive-electrode pole 14.

In the present embodiment, the D1 may be 76.7mm, the D2 may be 33mm, the D3 may be 27mm, the D4 may be 33mm. Each of the width of the first connecting portion 121 and the width of the second connecting portion 122 may be 11mm. In the y-direction, a ratio of the width of the first connecting portion 121, the width of the second connecting portion 122, and the spacing between the first connecting portion 121 and the second connecting portion 122 is 1:1:1. That is, each of the width of the first connecting portion 121, the width of the second connecting portion 122, and the spacing between the first connecting portion 121 and the second connecting portion 122 is 11mm. In this way, each of the first connecting portion 121 and the second connecting portion 122 may a respective one of the plurality of first weld marks 20 and avoid the positive-electrode pole 14.

As shown in FIG. 6, the third connecting portion 131 and the fourth connecting portion 132 are both disposed at an end of the second intermediate portion 133 near the positive-electrode connecting sheet 12, and that is, the third connecting portion 131 and the fourth connecting portion 132 are both disposed on a same side of the second intermediate portion 133 along the x-direction. Moreover, the second intermediate portion 133 connects the third connecting portion 131 with the fourth connecting portion 132, and the second intermediate portion 133 covers the negative-electrode pole. The third connecting portion 131 and the fourth connecting portion 132 are both disposed at the end of the second intermediate portion 133 near the positive-electrode connecting sheet 12, such that the third connecting portion 131 and the fourth connecting portion 132 are respectively connected to two negative-electrode tabs 112 of the two cell cores 11, and the second intermediate portion 133 may cover the negative-electrode pole that maintains a safe distance from the positive-electrode pole 14.

A length D5 of the negative-electrode connecting sheet 13 is in a range of 52mm-55mm, such as 52mm, 53mm, 54mm, 55mm, and so on. A sum of a length of the third connecting portion 131 and a length of the fourth connecting portion 132 is the length D5 of the negative-electrode connecting sheet 13. A width D6 of the negative-electrode connecting sheet 13 is in a range of 33mm-36mm, such as 33mm, 35mm, 36mm, and so on. Each of a width of the third connecting portion 131 and a width of the fourth connecting portion 132 is in a range of 11mm-12mm.

As shown in FIG. 6, the negative-electrode connecting sheet 13 is symmetrical about the central axis C2, and the central axis C2 is a central axis of the negative-electrode connecting sheet 13 in the width direction. The central axis C2 extends along the length direction of the negative-electrode connecting sheet 13, and the third connecting portion 131 and the fourth connecting portion 132 are located on two sides of the central axis C2, respectively. The center of the negative-electrode pole 15 is located on the central axis C2 of the negative-electrode connecting sheet 13. It can be understood that the negative-electrode connecting sheet 13 is connected to the negative-electrode pole 15 substantially through the second intermediate portion 133. Overlapping between the center of the negative-electrode pole 15 and the central axis C1 of the negative-electrode connecting sheet 13 allows the intermediate portion 133 to cover the negative-electrode pole 15 to achieve the connection. A distance D7 between a first side edge S31 of the second intermediate portion 133 and a first side edge S41 of the fourth connecting portion 132 is in a range of 27mm-30mm, such as 27mm, 28mm, 29mm, 30mm, and so on. It can be understood that the lithium ions and the electrons flow from the negative-electrode tab 112, through the third connecting portion 131 or the fourth connecting portion 132, and guided by the second intermediate portion 133 to reach the negative-electrode pole 15. Since the length of the second intermediate portion 133 is small, the distance D7 between the first side edge S31 of the second intermediate portion 133 and the first side edge S41 of the fourth connecting portion 132 is configured to allow the lithium ions and the electrons to be guided and concentrated from the fourth connecting portion 132 or the third connecting portion 131 to the second intermediate portion 133, i.e., concentrated around the negative-electrode pole 15. Further, the concentrated lithium ions and electrons are transferred to the negative-electrode pole 15.

A width D8 of the second intermediate portion 133 is in a range of 25mm-28mm, such as 25mm, 26mm, 28mm, and so on. Arranging the width D8 of the second intermediate portion 133 to be in the range of 25mm-28mm to allow the second intermediate portion 133 to be connected to the third connecting portion 131 and the fourth connecting portion 132. A size of the second intermediate portion 133 is appropriate, such that a space occupied by the negative-electrode connecting sheet 13 is reduced.

In the present embodiment, the D5 may be 52mm, the D6 may be 33mm, the D7 may be 27mm, the D8 may be 25mm, and the k may be 1.48.

In some embodiments, the cell core 11 is a stacked cell core of a square battery, or a jelly roll of a square battery. In the present disclosure, the cell core 11 is the stacked cell core. More specifically, the negative-electrode sheet 114, the separator, and the positive-electrode sheet 113 of the cell core 11 are stacked from bottom to top to form the stacked cell core.

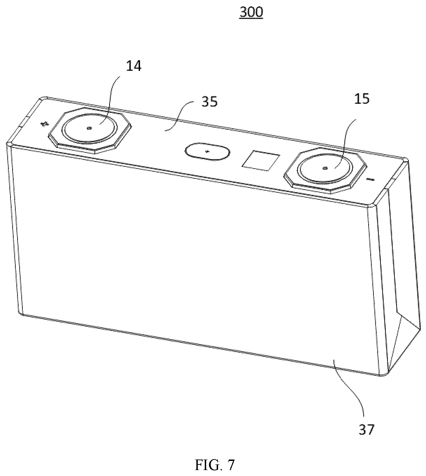

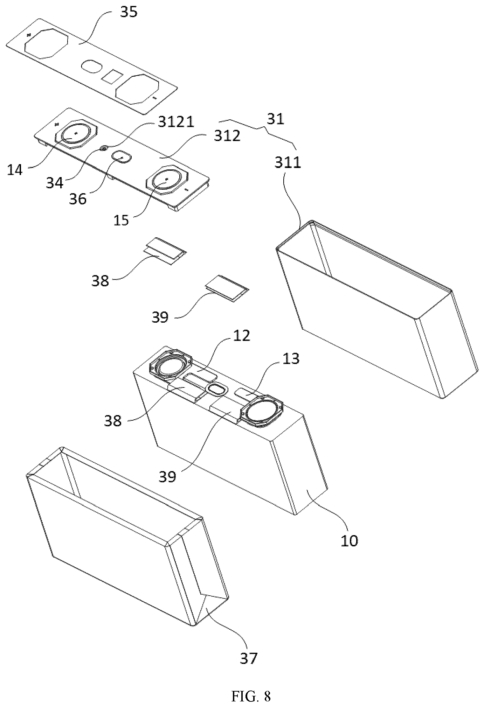

As shown in FIGS. 7 and 8, the present disclosure father provides a battery 300, including a housing 31 and the cell 10 arranged inside the housing 31. The cell 10 is the cell described in the embodiments of the present disclosure.

Further, the housing 31 includes a bottom shell 311 and a top cover assembly 312. The bottom shell 311 has an opening, and the cell 10 is located in the bottom shell 311. The bottom shell 311 may be an aluminum shell. The cell 10 is received in the bottom shell 311, and the top cover assembly 312 is fixed on the bottom shell 311 to cover the opening of the bottom shell 311. The top cover assembly 312 defines mounting holes respectively for the positive-electrode pole 14 and the negative-electrode pole 15. The positive-electrode tab 111 of the cell 10 is connected to the positive-electrode pole 14 via the positive-electrode connecting sheet 12, and the negative-electrode tab 112 of the cell 10 is connected to the negative-electrode pole 15 via the negative-electrode connecting sheet 13.

Further, the battery 300 further includes a sealing sheet and a sealing bead 34. The top cover assembly 312 defines a liquid injection hole 3121, and the sealing bead 34 is inserted into the liquid injection hole 3121 to enhance sealing performance of the battery. The sealing sheet seals the liquid injection hole 3121. The sealing sheet may be an aluminum sheet and is configured to weld and seal the liquid injection hole 3121.

Further, an isolation bracket may be disposed between the positive-electrode connecting sheet 12 and the cell core 11 and between the negative-electrode connecting sheet 13 and the cell core 11. The isolation bracket may prevent the cell core 11 from contacting the positive-electrode connecting sheet 12 and the negative-electrode connecting sheet 13.

Further, the battery 300 further includes a top insulation sheet 35. The top cover assembly 312 is arranged with an explosion-proof valve 36. The top insulation sheet 35 covers a side of the top cover assembly 312 away from the cell 10, and the top insulation sheet 35 has an opening at a position corresponding to the explosion-proof valve 36 to expose the explosion-proof valve 36. An insulation effect of the top insulation sheet 35 may facilitate preventing the cell 10 from being short-circuited.

In some embodiments, a bottom support sheet is arranged between a bottom of the cell 10 and the bottom shell 311. The bottom support sheet may prevent a short circuit caused by the cell 10 from contacting the bottom shell 311. In addition, an outer surface of the cell 10 is covered with a protective film layer to prevent a short circuit caused by the negative-electrode tab 112 directly contacting the bottom shell 311.

An outer surface of the bottom shell 311 is covered with a blue film 37 to prevent a short circuit of the battery.

In some embodiments, the positive-electrode tab 111 and the negative-electrode tab 112 of the cell 10 are located on a same side of the cell 10. In other embodiments, the positive-electrode tab 111 and the negative-electrode tab 112 may be located on different sides of the cell 10.

In some embodiments, each of the positive-electrode connecting sheet 12 and the negative-electrode connecting sheet 13 is arranged with an auxiliary welding sheet. For example, a first auxiliary welding sheet 38 is arranged on the positive-electrode connecting sheet 12, and a second auxiliary welding sheet 39 is arranged on the negative-electrode connecting sheet 13, so as to protect the tabs from being cracked during welding.

The present disclosure further provides a method for manufacturing the battery 300, including following operations.

In an operation S1, a positive electrode slurry and a negative electrode slurry are prepared. A positive electrode active material, a conductive agent and a binder of a certain mass ratio are uniformly dispersed in a solvent to obtain the positive electrode slurry. A negative electrode active material, a conductive agent and a binder of a certain mass ratio are uniformly dispersed in a solvent to obtain the negative electrode slurry.

In an operation S2, the positive electrode slurry and the negative electrode slurry are coated. The positive electrode slurry, which is uniformly dispersed, is stably coated onto a positive-electrode current collector; and the negative electrode slurry, which is uniformly dispersed, is stably coated onto a negative-electrode current collector.

In an operation S3, a positive-electrode sheet and a negative-electrode sheet are prepared. The coated positive-electrode current collector is rolled to have a specified thickness and is cut to a specified size, so as to obtain the positive-electrode sheet; and the coated negative-electrode current collector is rolled to have a specified thickness and is cut to a specified size, so as to obtain the negative-electrode sheet.

In an operation S4, stacking and assembling the positive-electrode sheet and the negative-electrode sheet. The positive-electrode sheet and the negative-electrode sheet are stacked to form the cell core, where the separator is disposed between the positive-electrode sheet and the negative-electrode sheet; and the positive-electrode sheet, the negative-electrode sheet and the separator are assembled with the housing.

In an operation S5, the assembled battery is baked in a vacuum oven to have a specified moisture value.

In an operation S6, an electrolyte is injected into the battery through the liquid injection hole on the top cover assembly, and the battery is left static to allow the electrolyte to completely infiltrate the positive-electrode sheet and the negative-electrode sheet.

In an operation S7, the battery is formed and activated, gas generated from side reactions in the battery are evacuated based on a negative pressure.

In an operation S8, the activated battery is welded for sealing, and capacity grading is performed according to a preset process.

In the above, the cell and the battery provided by the present disclosure are described.

According to the present disclosure, the cell includes at least one core pack, each cell core, and each of the at least one core pack includes a positive-electrode sheet, a positive-electrode tab, a negative-electrode sheet, and a negative-electrode tab. The positive-electrode tab is disposed on the positive-electrode sheet. The positive-electrode tab extends away from the positive-electrode sheet, and the length of the positive-electrode tab in the direction perpendicular to the extension direction of the positive-electrode tab is L1. The negative-electrode sheet is arranged with the negative-electrode tab. The negative-electrode tab extends away from the negative-electrode sheet, and the length of the negative-electrode tab in the direction perpendicular to the extension direction of the negative-electrode tab is L2, where L1/L2=n, and the n is in a range of 1.2≤n≤2. That is, the length of the positive-electrode tab is greater than that of the negative-electrode tab. The enlarged positive-electrode tab increases the electron transferring speed, and the high-speed electron channel is constructed, such that the electron transferring resistance during charging is significantly reduced, and the DCR of the cell is significantly reduced. The DCR of the cell may be less than or equal to 0.42. In addition, increasing the length L1 of the positive-electrode tab may increase the weldable area of the positive-electrode tab, improving the overcurrent capacity of the cell during fast charging, reducing the temperature rise of the cell during high-rate charging, and meeting the requirements of fast charging. The present disclosure further provides a battery, including the above-mentioned cell, having the above-mentioned technical effects.

## Claims

1. A cell, comprising at least one cell core (11), wherein each of the at least one cell core (11) comprises a positive-electrode sheet (113), a positive-electrode tab (111), a negative-electrode sheet (114), and a negative-electrode tab (112); the positive-electrode tab (111) is arranged on the positive-electrode sheet (113); the positive-electrode tab (111) extends away from the positive-electrode sheet (113); a length of the positive-electrode tab (111) in a direction perpendicular to an extension direction of the positive-electrode tab (111) is L1; the negative-electrode tab (112) is arranged on the negative-electrode sheet (114); the negative-electrode tab (112) extends away from the negative-electrode sheet (114), a length of the negative-electrode tab (112) in a direction perpendicular to an extension direction of the negative-electrode tab (112) is L2;
wherein L1/L2=n, and the n is in a range of 1.2≤n≤2.

2. The cell according to claim 1, wherein the n is in a range of 1.6≤n≤1.8.

3. The cell according to claim 1, further comprising a positive-electrode pole (14), wherein the positive-electrode pole (14) is arranged on each of the at least one cell core (11); the positive-electrode pole (14) is electrically connected to the positive-electrode tab (111); a diameter of the positive-electrode pole (14) is d1.

4. The cell according to claim 3, wherein in the direction perpendicular to the extension direction of the positive-electrode tab (111), a distance between a side of the positive-electrode tab (111) away from the negative-electrode tab (112) and an edge of the positive-electrode sheet (113) is L7, a distance between a center of the positive-electrode pole (14) and the edge of the positive-electrode sheet (113) is L8, wherein L8-L7-d1/2≥5mm;
preferably, L8-L7+d1/2≤L1/2.

5. The cell according to claim 3, wherein the positive-electrode tab (111) is arranged with at least two first weld marks (20), the two first weld marks (20) are arranged along the direction perpendicular to the extension direction of the positive-electrode tab (111); and/or
a spacing between the two first weld marks (20) is in a range of 5mm-10mm; and/or
the negative-electrode tab (112) is arranged with one second weld mark (21); and/or
a total area of the two first weld marks (20) on the positive-electrode tab (111) is greater than a total area of the second weld mark (21) on the negative-electrode tab (112); and/or
the at least two first weld marks (20) have a same size, and the size of each of the at least two first weld marks (20) is the same as a size of the second weld mark (21).

6. The cell according to claim 5, wherein each of a width of each first weld mark and a width of the second weld mark (21) is in a range of 6mm-10mm, and a length of each first weld mark and a length of the second weld mark (21) is in a range of 15mm-20mm.

7. The cell according to claim 1, further comprising a positive-electrode connecting sheet (12) and a negative-electrode connecting sheet (13);
wherein, the positive-electrode connecting sheet (12) is connected to the positive-electrode tab (111), a length of the positive-electrode connecting sheet (12) is D1;
the negative-electrode connecting sheet (13) is connected to the negative-electrode tab (112), a length of the negative-electrode connecting sheet (13) is D5;
wherein D1/D5=k, and the k is in a range of 1.3≤n≤1.5.

8. The cell according to claim 7, wherein a distance between the positive-electrode tab (111) and the negative-electrode tab (112) is in a range of 22mm-35mm, and a distance between the positive-electrode connecting sheet (12) and the negative-electrode connecting sheet (13) is in a range of 35mm-40mm; and/or
in the direction perpendicular to the extension direction of the positive-electrode tab (111), a distance between a side of the positive-electrode tab (111) away from the negative-electrode tab (112) and an edge of the positive-electrode sheet (113) is L7, a distance between a side of the positive-electrode connecting sheet (12) away from the negative-electrode connecting sheet (13) and the edge of the positive-electrode sheet (113) is L15, and L7≥L15; and/or
a distance between a side of the negative-electrode tab (112) away from the positive-electrode tab (111) and an edge of the negative-electrode sheet (114) is L11, the L11 is in a range of 30mm-40mm; a distance between a center of the positive-electrode pole (14) and a center of the negative-electrode pole is L13, and the L13 is in a range of 125mm-130mm.

9. The cell according to claim 8, wherein the number of the at least one cell core (11) is two, the positive-electrode connecting sheet (12) comprises a first connecting portion (121), a second connecting portion (122), and a first intermediate portion (123); the negative-electrode connecting sheet (13) comprises a third connecting portion (131), a fourth connecting portion (132), and a second intermediate portion (133);
the first connecting portion (121) is welded to the positive-electrode tab (111) of one of the two cell cores (11), the second connecting portion (122) is welded to the positive-electrode tab (111) of the other one of the two cell cores (11); the third connecting portion (131) is welded to the negative-electrode tab (112) of one of the two cell cores (11), the fourth connecting portion (132) is welded to the negative-electrode tab (112) of the other one of the two cell cores (11).

10. The cell according to claim 9, wherein the third connecting portion (131) and the fourth connecting portion (132) are both disposed at an end of the second intermediate portion (133) near the positive-electrode connecting sheet (12); the second intermediate portion (133) connects the third connecting portion (131) with the fourth connecting portion (132); the second intermediate portion (133) covers the negative-electrode pole;
the first connecting portion (121) and the second connecting portion (122) are respectively located on two sides of the first intermediate portion (123); the first intermediate portion (123) is connected between the first connecting portion (121) and the second connecting portion (122); the first intermediate portion (123) covers the positive-electrode pole (14).

11. The cell according to claim 10, wherein along an extension direction of the second connecting portion (122), a distance between a side edge of the first intermediate portion (123) near the negative-electrode connecting sheet (13) and a side edge of the second connecting portion (122) near the negative-electrode connecting sheet (13) is in a range of 30mm-33mm; and/or
along a direction in which the first connecting portion (121), the first intermediate portion (123), and the second connecting portion (122) are connected to each other in sequence, a length of the first intermediate portion (123) firstly decreases and then increases.

12. The cell according to claim 9, wherein a ratio of a width of the first connecting portion (121), a width of the second connecting portion (122), and a spacing between the first connecting portion (121) and the second connecting portion (122) is 1:1:1.

13. The cell according to claim 1, wherein a width L3 of the positive-electrode sheet (113) in the direction perpendicular to the extension direction of the positive-electrode tab (111) is 1mm-3mm smaller than a width L4 of the negative-electrode sheet (114) in the direction perpendicular to the extension direction of the negative-electrode tab (112); and a width L5 of the positive-electrode tab (111) in a direction parallel to the extension direction of the positive-electrode tab (111) is 1mm-3mm larger than a width L6 of the negative-electrode tab (112) in a direction parallel to the extension direction of the negative-electrode tab (112); and/or
the L1 is in a range of 70mm-80mm, and the L2 is in a range of 40mm-50mm.

14. The cell according to any one of claims 1 to 13, wherein an outer angle between the positive-electrode tab (111) and the positive-electrode sheet (113) is an obtuse angle, and an outer angle between the negative-electrode tab (112) and the negative-electrode sheet (114) is an obtuse angle; and/or
the outer angle between the positive-electrode tab (111) and the positive-electrode sheet (113) is in a range of 92°-100°, and the outer angle between the negative-electrode tab (112) and the negative-electrode sheet (114) is in a range of 92°-100°

15. A battery, comprising: the cell (10) according to any one of claims 1-14, a protective film layer, and a housing (31); wherein the protective film layer covers an outer surface of the cell (10), the cell (10) and the protective film layer are arranged inside the housing (31).
